# EUROPEAN PATENT SPECIFICATION

(11) **EP 4 102 611 B1**
(45) Date of publication and mention of the grant of the patent: **20.08.2025**
(21) Application number: 21880417.7
(22) Date of filing: 08.10.2021
(51) Int. Cl.: H01M 10/0567, H01M 10/0568, H01M 10/052

(54) **NON-AQUEOUS ELECTROLYTE FOR LITHIUM SECONDARY BATTERY AND LITHIUM SECONDARY BATTERY COMPRISING SAME**
WASSERFREIER ELEKTROLYT FÜR LITHIUMSEKUNDÄRBATTERIE UND LITHIUMSEKUNDÄRBATTERIE DAMIT
ÉLECTROLYTE NON AQUEUX POUR BATTERIE SECONDAIRE AU LITHIUM ET BATTERIE SECONDAIRE AU LITHIUM LE COMPRENANT

(30) Priority: 12.10.2020 KR 20200131411
(43) Date of publication of application: 14.12.2022
(73) Proprietor: LG Energy Solution, Ltd., Seoul 07335 (KR)
(72) Inventor: KIM, Ha Eun, Daejeon 34122 (KR); KIM, Hyun Seung, Daejeon 34122 (KR); LEE, Chul Haeng, Daejeon 34122 (KR); OH, Jeong Woo, Daejeon 34122 (KR)
(74) Representative: Hoffmann Eitle
(86) International application number: PCT/KR2021/013860
(87) International publication number: WO 2022/080770

(56) References cited:
- EP-A1- 2 843 748
- WO-A1-2020/149678
- CN-A- 102 983 358
- JP-A- 2013 243 116
- KR-A- 20150 024 478
- KR-A- 20200 074 902
- KR-A- 20200 089 623
- KR-A- 20200 089 623
- KR-A- 20200 105 227
- US-A1- 2020 251 777

## Description

### [Technical Field]

This application claims the benefit of priority based on Korean Patent Application No. 10-2020-0131411, filed on October 12, 2020.

The present invention relates to a non-aqueous electrolyte solution for a secondary battery, and more particularly, to a non-aqueous electrolyte solution for a secondary battery, which can improve the volume and resistance performance when storing the non-aqueous electrolyte solution containing LiPF₆ lithium salt at a high temperature, and a secondary battery including the same.

### [Background Art]

Recently, the interest in developing energy storage technology is on the increase, and as the applied fields are expanded to mobile phones, camcorders and laptop PCs, and electric vehicles, efforts on the research and development of electrochemical elements are currently embodied.

Among electrochemical devices, the interest in the development of secondary batteries is on the increase, and particularly, lithium secondary batteries developed in 1990s have been spotlighted with the advantages that the operating voltage is high and the energy density is large.

In the case of a lithium secondary battery system, unlike an initial period when lithium metal was directly applied to a system, a transition metal oxide containing lithium is used as the positive electrode material, and carbon-based materials such as graphite and alloy-based materials such as silicon are applied to the negative electrode as the negative electrode material. In this way, a system, in which lithium metal is not directly used in a battery, is currently implemented.

Such a lithium secondary battery is composed of a positive electrode composed of a transition metal oxide containing lithium, a negative electrode capable of storing lithium, an electrolyte solution used for transferring lithium ions, and a separator. Herein, the electrolyte solution is known as a component which significantly affects the stability and safety of the battery, and a lot of researches on the electrolyte solution are currently conducted.

An electrolyte solution for a lithium secondary battery is composed of a lithium salt, an organic solvent which dissolves the lithium salt, and a functional additive. Herein, in order to improve electrochemical characteristics of the battery, it is important to appropriately select these components. Examples of currently used lithium salt include LiPF₆, LiBF₄, LiFSI (lithium fluorosulfonyl imide, LiN(SO₂F)₂), LiTFSI (lithium(bis)trifluoromethanesulfonyl imide, LiN(SO₂CF₃)₂) or LiBOB (lithium bis(oxalate) borate, LiB(C₂O₄)₂), and examples of the organic solvent include a carbonate-based organic solvent, an ester-based organic solvent, or an ether-based organic solvent.

In the case of such a lithium secondary battery, the increase in the resistance and reduction in the capacity during the charge/discharge and storage at a high temperature are presented as a big problem in terms of deterioration of the performance. Herein, one of the causes of such a problem is side reaction occurring due to deterioration at a high temperature, particularly deterioration due to decomposition of salt at a high temperature. If the byproducts of salt are activated and then decompose the film formed on the surface of the positive electrode and the negative electrode terminal, the passivation capability of the film may drop, thereby causing additional decomposition of the electrolyte solution and self-discharge.

LiPF₆ is mainly used as the lithium salt in a non-aqueous electrolyte solution. Since anion PF₆⁻ is vulnerable to heat, Lewis acid such as PF₅ is generated due to thermal decomposition when a battery is exposed to a high temperature, and such PF₅ is known to cause decomposition of carbonate-based organic solvent itself and accelerate elution of transition metal of the positive electrode active material by generating HF.

In the case of an electrode material of a lithium ion battery, particularly a negative electrode, a graphite-based negative electrode is usually used. In the case of graphite, the operation potential is equal to or less than 0.3V (vs. Li/Li+), and the currently used electrolyte solution is reduced and decomposed. Such a reduction-decomposed product allows lithium ions to be permeated, but the additional decomposition of the electrolyte solution forms a solid electrolyte interphase (SEI) film.

However, if the SEI film fails to have a passivation capability enough to suppress additional decomposition of the electrolyte solution, the electrolyte solution is additionally decomposed during storage, and the charged graphite is self-discharged, thereby showing a phenomenon that the potential of the entire battery drops. As such, in order to keep passivation capability of SEI in a high temperature, there is an urgent need for an additive which can suppress damage to an SEI film by removing HF, PF₅, etc., which are decomposition products of LiPF₆, generated due to heat/moisture, or can additionally form a stable film on the SEI film formed on the positive/negative electrode.

In order to suppress deterioration in a high temperature, Japanese Patent Application No. 2002-329528 discloses a technology for suppressing gas generation at high temperatures using an unsaturated sultone compound, and Japanese Patent Publication No. 2001-006729 discloses a technology for improving high temperature storage characteristics by using a carbonate compound containing a vinyl group.However, these conventional technologies did not effectively remove PF₅, thereby failing to sufficiently solve the existing problems.

Therefore, there is a need for a technology for a non-aqueous electrolyte solution capable of effectively removing PF₅ which is generated as LiPF₆-based lithium salt is thermally decomposed. KR20200089623A discloses an electrolyte solution comprising a first additive.

### [Disclosure]

### [Technical Problem]

The present invention is believed to solve at least some of the above problems. For example, an aspect of the present invention provides a non-aqueous electrolyte solution capable of effectively removing PF₅ which may be generated in an electrolyte solution containing LiPF₆ lithium salt, and a lithium secondary battery having improved high temperature storage characteristics through this.

### [Technical Solution]

A non-aqueous electrolyte solution for a lithium secondary battery of the present invention includes: a lithium salt; an organic solvent; a first additive; and second additive. Herein, the first additive is a compound represented by following chemical formula 1, and the second additive is a compound represented by following chemical formula 2. 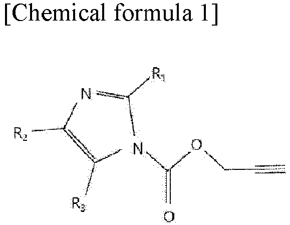 where, in the above chemical formula 1,
each of R1 to R3 is a hydrogen or alkyl group having 1 to 3 carbon atoms.

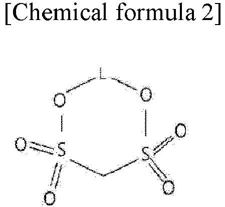

Herein, L is an alkylene group having 1 to 10 carbon atoms.

In an embodiment of the present invention, an amount of the first additive contained in the electrolyte solution corresponds to 0.05 to 3 wt% of a total weight of the electrolyte solution, and an amount of the second additive contained in the electrolyte solution corresponds to 0.05 to 5 wt% of the total weight of the electrolyte solution.

In an embodiment of the present invention, an amount of the first additive and the second additive contained in the electrolyte solution corresponds to 0.3 to 3 wt% of a total weight of the electrolyte solution.

In an embodiment of the present invention, a weight ratio of the first additive to the second additive may be in a range of 2: 8 to 7: 3 and may preferably be in a range of 3: 7 to 6: 4.

In an embodiment of the present invention, the compound represented by the chemical formula 1 is a compound represented by following chemical formula 1a.

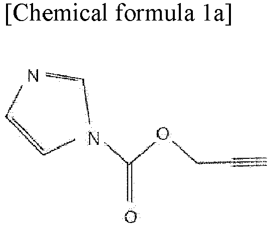

In an embodiment of the present invention, the compound represented by the chemical formula 2 is a compound represented by following chemical formula 2a.

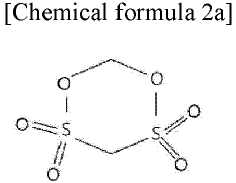

**In** an embodiment of the present invention, the non-aqueous electrolyte solution for a lithium secondary battery further includes: at least one selected from the group consisting of halogen-substituted or unsubstituted cyclic carbonate compound, propionate compound, nitrile compound, phosphate compound, borate compound, sultone compound, sulfate compound, and lithium salt compound and more preferably further includes vinylene carbonate (VC) and propane sultone (PS) as an additive.

In an embodiment of the present invention, a weight ratio of a total weight of the first additive and the second additive to a total weight of the vinylene carbonate (VC) and the propane sultone (PS) may be in a range of 1: 1 to 1: 4 and may preferably be in a range of 1: 1 to 1: 3.

In an embodiment of the present invention, the lithium salt contains LiPF₆.

A lithium secondary battery of the present invention includes the above-described non-aqueous electrolyte solution for a lithium secondary battery.

### [Advantageous Effects]

According to the additive contained in the non-aqueous electrolyte solution of the present invention, it is possible prevent a rapid increase of the resistance under high temperature conditions and maintain the capacity constant by effectively removing by-products generated from lithium salt, thereby improving high temperature characteristics.

Further, since the non-aqueous electrolyte solution for a lithium secondary battery can form a firm SEI film on the negative electrode, it is possible to provide a lithium secondary battery capable of easily controlling the amount of gases generated due to the side reaction during a high temperature storage while maintaining excellent resistance characteristics.

### [Detailed Description of the Preferred Embodiments]

Hereinafter, the present invention will be described in detail. The terms and words used in the present specification and claims should not be construed as limited to ordinary or dictionary terms and the inventor may properly define the concept of the terms in order to best describe its invention. The terms and words should be construed as meaning and concept consistent with the technical idea of the present invention.

Further, in the wording "carbon number a to b" of the present specification, "a" and "b" means the number of carbon atoms included in a specific functional group. Namely, the functional group may include a to b carbon atoms.For example, "alkylene group of carbon number 1 to 5" means an alkylene group having 1 to 5 carbon atoms, namely, -CH₂-, - CH₂CH₂-, -CH₂CH₂CH₂-, -CH₂(CH₂)CH-, -CH(CH₂)CH₂- and -CH(CH₂)CH₂CH₂-, etc.

The alkylene group means a bivalent unsaturated hydrocarbon group.

### Non-aqueous electrolyte solution for lithium secondary battery

In an embodiment of the present invention, the present invention provides a non-aqueous electrolyte solution for a lithium secondary battery including: a lithium salt; an organic solvent; a first additive; and second additive, in which the first additive is a compound represented by following chemical formula 1, and the second additive is a compound represented by following chemical formula 2.

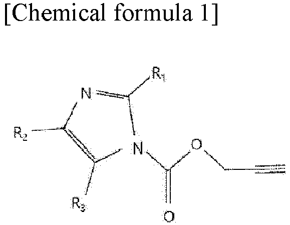

Herein, each of R1 to R3 is a hydrogen or alkyl group having 1 to 3 carbon atoms.

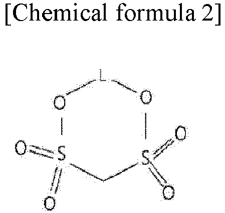

Herein, L is an alkylene group having 1 to 10 carbon atoms.

### (1) Lithium salt

In the non-aqueous electrolyte solution for a lithium secondary battery according to an embodiment of the present invention, the lithium salt contains LiPF₆, and what is generally used in the electrolyte solution for a lithium secondary battery in addition to LiPF₆ may be used without limitation. For example, Li⁺ is included as the cation of the lithium salt, and at least one selected from the group consisting of F⁻, Cl⁻, Br⁻, I⁻, NO₃⁻, N(CN)₂⁻, ClO₄⁻, BF₄⁻, B₁₀Cl₁₀⁻, PF₆⁻, CF₃SO₃⁻, CH₃CO₂⁻, CF₃CO₂⁻, AsF₆⁻, SbF₆⁻, AlCl₄⁻, AlO₄⁻, CH₃SO₃⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, SCN⁻ and (CF₃CF₂SO₂)₂N⁻ may be included as the anion.

Specifically, the lithium salt may contain one or a combination of two or more selected from the group consisting of LiPO₂F₂, LiCl, LiBr, LiI, LiClO₄, LiBF₄, LiB₁₀Cl₁₀, LiPF₆, LiCF₃SO₃, LiCH₃CO₂, LiCF₃CO₂, LiAsF₆, LiSbF₆, LiAlCl₄, LiAlO₄, LiCH₃SO₃, LiFSI (lithium fluorosulfonyl imide, LiN(SO₂F)₂), LiTFSI (lithium (bis)trifluoromethanesulfonimide, LiN(SO₂CF₃)₂) and LiBETI (lithium bisperfluoroethanesulfonimide, LiN(SO₂C₂F₅)₂).More specifically, the lithium salt may contain one or a mixture of two or more selected from group consisting of LiPF₆, LiBF₄, LiPO₂F₂, LiCH₃CO₂, LiCF₃CO₂, LiCH₃SO₃, LiFSI, LiTFSI and LiN(C₂F₅SO₂)₂.

The lithium salt can be appropriately changed within a typically available range, but specifically, 0.1M to 3M lithium salt and more specifically 0.8M to 2.5M lithium salt may be included in the electrolyte solution. If the concentration of the lithium salt exceeds 3M, the viscosity of the non-aqueous electrolyte solution is increased, and the lithium ion transfer effect is lowered and the non-aqueous electrolyte solution wettability is lowered, so that it is difficult to form a SEI film having a uniform thickness on the surface of the electrode.

### (2) Organic solvent

The organic solvent may be minimized in decomposition by oxidation reaction during the charge/discharge of the secondary battery, and there is no limit to the kind of the organic solvent as long as it can show desired characteristics together with the additive. For example, a carbonate organic solvent, an ether organic solvent or an ester organic solvent, and the like can be used alone or in combination of two or more.

The carbonate organic solvent in the organic solvent may include at least one of a cyclic carbonate organic solvent and a linear carbonate organic solvent. Specifically, the cyclic carbonate-based organic solvent may include at least one selected from the group consisting of ethylene carbonate (EC), propylene carbonate (PC), 1,2-butylene carbonate, 2,3-butylene carbonate, 1,2-pentylalene carbonate, 2,3-pentylene carbonate, vinylene carbonate (VC) and fluoroethylene carbonate (FEC), and may specifically include a mixed solvent of ethylene carbonate having a high dielectric constant, and propylene carbonate having a relatively low melting point, compared to ethylene carbonate.

Further, the linear carbonate-based organic solvent is a solvent having a low viscosity and a low dielectric constant and may include at least one selected from the group consisting of dimethyl carbonate (DMC), diethyl carbonate (DEC), dipropyl carbonate, ethyl methyl carbonate (EMC), methylpropyl carbonate, and ethylpropyl carbonate, and may specifically include ethyl methyl carbonate (EMC) and diethyl carbonate (DEC).

In addition, as the ether-based organic solvent, any one selected from the group consisting of dimethyl ether, diethyl ether, dipropyl ether, methylethyl ether, methylpropyl ether, and ethylpropyl ether, or a mixture of two or more thereof may be used, but is not limited thereto.

The ester-based organic solvent may be at least one selected from the group consisting of a linear ester-based organic solvent and a cyclic ester-based organic solvent.

At this time, one or a mixture of two or more selected from the group consisting of methyl acetate, ethyl acetate, propyl acetate, methyl propionate, ethyl propionate, propyl propionate, and butyl propionate may be used as the linear ester-based organic solvent, but the present invention is not limited to these examples.

One or a mixture of two or more selected from the group consisting of γ-butyrolactone, γ-valerolactone, γ-caprolactone, σ-valerolactone, and ε-caprolactone may be used as the cyclic ester-based organic solvent, but the present invention is not limited to these examples.

A cyclic carbonate-based organic solvent having a high viscosity capable of easily dissociating lithium salt in the electrolyte due to a high dielectric constant may be used as the organic solvent. Further, in order to manufacture an electrolyte having a higher electrical conductivity, a linear carbonate compound having a low viscosity and a low dielectric constant, such as dimethyl carbonate and diethyl carbonate and a linear ester compound, may be mixed together with the cyclic carbonate-based organic solvent at an appropriate ratio.

More specifically, the organic solvent may be obtained by mixing the cyclic carbonate compound with the linear carbonate compound, and the weight ratio of the cyclic carbonate compound and the linear carbonate compound may be in the range of 10: 90 to 70: 30.

### (3) First additive

Further, the non-aqueous electrolyte solution for a secondary battery of the present invention may include a compound represented by following chemical formula 1 as a first additive. 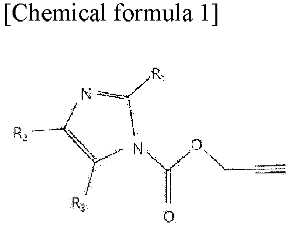 (In the chemical formula 1, each of R1 to R3 is a hydrogen or alkyl group having 1 to 3 carbon atoms.)

Since the compound represented by the chemical formula 1 contains a functional group which functions as a Lewis base containing a nitrogen element in the structure, it is not possible to suppress decomposition of anions, but it is possible to remove Lewis acid such as HF and PF₅, which are decomposition products produced by the decomposition of anions. Hence, it is possible to suppress deterioration due to chemical reaction of the film on the surface of the positive electrode or the negative electrode resulting from the Lewis acid. In particular, the compound of chemical formula 1 can effectively remove Lewis acid, which is a decomposition product of a lithium salt, by an imidazole functional group. As a result, since it is possible to prevent additional electrolyte solution decomposition of the battery by destruction of the film by preventing deterioration of the film, it is finally possible to suppress self-discharge of the battery.

In an embodiment of the present invention, a compound represented by following chemical formula 1a is more effective in removing PF₅ as the compound represented by the chemical formula 1.

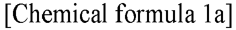

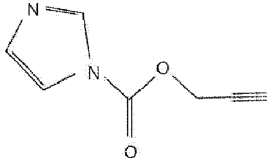

### (4) Second additive

Further, the non-aqueous electrolyte solution for a secondary battery of the present invention may include a compound represented by following chemical formula 2 as a second additive.

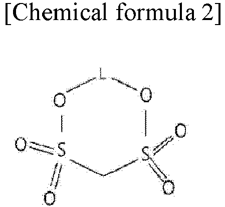

Herein, L is an alkylene group having 1 to 10 carbon atoms.

Since the sulfonate compound of the chemical formula 2 can reduce by-products produced by side reaction between the electrode and the electrolyte solution by forming a stable protective film on the electrode, it is possible to suppress the increase in the resistance or gas generation by the additional electrode side reaction.

In an embodiment of the present invention, the compound represented by the chemical formula 2 is most preferably a compound represented by following chemical formula 2a.

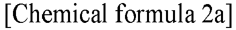

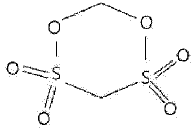

In a specific example of the present invention, an amount of the first additive contained in the electrolyte solution corresponds to 0.05 to 3 wt% of a total weight of the electrolyte solution, and preferably 0.3 to 3 wt% of the total weight of the electrolyte solution. Further, an amount of the second additive contained in the electrolyte solution corresponds to 0.05 to 5 wt% of a total weight of the electrolyte solution, and preferably 0.3 to 3 wt% of the total weight of the electrolyte solution.

Further, the weight ratio of the first additive to the second additive may be in a range of 2: 8 to 7: 3, preferably in a range of 3: 7 to 6: 4, and more preferably in a range of 3: 7 to 5: 5.

When the content of the first additive and the second additive is in the above range, secondary batteries having improved performance can be manufactured. For example, in the above range, by-products can be effectively removed, and the metal elution can be effectively suppressed, thereby improving the effect of controlling the increase in the resistance of the film by decomposition of the additive.

### (5) Additional additive

The non-aqueous electrolyte solution of the present invention may further include an additional additive which can form a stable film on the surface of the negative electrode and the positive electrode or suppress decomposition of a solvent in the non-aqueous electrolyte solution and act as a complementary element for improving mobility of lithium ions while not significantly increasing the initial resistance in addition to the effects of the mixed additive by being used together with the mixed additive.

For example, an additive for forming an SEI film capable of forming a stable film on the surface of the positive electrode and the negative electrode terminal may be used as the additional additive.

Specifically, the non-aqueous electrolyte solution for a lithium secondary battery may further include: at least one selected from the group consisting of halogen-substituted or unsubstituted cyclic carbonate compound, propionate compound, nitrile compound, phosphate compound, borate compound, sultone compound, sulfate compound, and lithium salt compound as an additive used for formation of an SEI film.

Specifically, the halogen-substituted cyclic carbonate compound or the halogen-unsubstituted cyclic carbonate compound may improve durability of the battery by forming a stable SEI film on the surface of the negative electrode during battery activation.

An example of such a halogen-substituted cyclic carbonate compound may be fluoroethylene carbonate (FEC). Examples of the halogen-unsubstituted cyclic carbonate compound may be vinylene carbonate (VC) and vinyl ethylene carbonate (VEC), but vinylene carbonate (VC) is preferred in terms of compatibility with the first additive and the second additive.

The content of the halogen-substituted cyclic carbonate compound or the halogen-unsubstituted cyclic carbonate compound may correspond to 5 wt% of the total weight of the non-aqueous electrolyte solution. When the content of the cyclic carbonate compound in the non-aqueous electrolyte solution exceeds 5 wt%, the cell swelling suppressing performance and initial resistance may be deteriorated.

When the nitrile compound is used together with the above-described mixed additive, effects of improvement of high temperature characteristics, etc. can be expected by positive/negative electrode film stabilization. Namely, it may act as a supplementary element in forming a negative electrode SEI film, suppress decomposition of a solvent in the electrolyte, and improve mobility of lithium ions. Examples of the nitrile compound may include at least one selected from the group consisting of succinonitrile, adiponitrile, acetonitrile, propionitrile, butyronitrile, valeronitrile, caprylonitrile, heptanenitrile, cyclopentanecarbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, 1,4-dicyano-2-butene, glutaronitrile, 1,3,6-hexanetricarbonitrile, and pimelonitrile.

The content of the nitrile compound may correspond to 8 or less wt% of the total weight of the non-aqueous electrolyte solution. When the total content of the nitrile compound in the non-aqueous electrolyte solution exceeds 8 wt%, the resistance increases due to the increase of the film formed on the surface of the electrode, thereby deteriorating the performance of the battery.

Further, since the phosphate compound stabilizes PF6 anions in the electrolyte solution and helps formation of a positive electrode and negative electrode film, thereby improving durability of the battery. Some examples of the phosphate-based compounds may include at least one selected from the group consisting of lithium difluorophosphate (LiDFP, LiPO₂F₂), lithium tetramethyltrimethyl silyl phosphate, trimethyl silyl phosphite (TMSPi), trimethyl silyl phosphate (TMSPa), ethyl di(prop-2-yn-1-yl)phosphate, allyl diphosphate, tris(2, 2,2-trifluoroethyl) phosphate (TFEPa) and tris(trifluoroethyl) phosphite, and the content of the phosphate-based compound may correspond to 3 or less wt% of the total weight of the non-aqueous electrolyte solution.

The borate compound may improve mobility of the lithium ions by promoting ion pair separation, lower the interface resistance of the SEI film, and may solve problems such as hydrofluoric acid gas generation by dissociating materials such as LiF, which are generated during battery reaction and are not easily separated. LiBOB, LiB(C₂O₄)₂, lithium oxalyldifluoroborate, or tetramethyltrimethylsilylborate (TMSB) may be used as the borate compound, and the content of the borate compound may be equal to or less than 3 wt% of the total weight of the non-aqueous electrolyte solution.

At least one compound selected from the group consisting of propane sultone (PS), 1,4-butene sultone, ethane sultone, 1,3-propene sultone, and 1-methyl-1,3-propene sultone may be used as the sultone compound, and the content of the sultone compound may be in the range of 0.3 to 5 wt% and specifically 1 to 5 wt% of the total weight of the non-aqueous electrolyte solution. Among them, 1,3-propane sultone (PS) is more preferred in terms of compatibility with the first additive and the second additive.

When the content of the sultone-based compound in the non-aqueous electrolyte solution exceeds 5 wt%, an excessively thick film may be formed on the surface of the electrode, thereby increasing the resistance and deteriorating the output, and the resistance may increase by a large amount of additives in the non-aqueous electrolyte solution, thereby deteriorating the output characteristics.

Further, the lithium salt-based compound is a compound which is different from a lithium salt contained in the non-aqueous electrolyte solution. Some examples of the lithium salt-based compound include one or more selected from the group consisting of lithium methylsulfate, lithium ethylsulfate, lithium 2-trifluoromethyl-4,5-dicyanoimidazole, lithium tetrafluorooxalatophosphate, LiODFB and LiBF₄, and the content of the lithium salt-based compound may be equal to or less than 3 wt% of the total weight of the non-aqueous electrolyte solution.

The content of the above-described additional additive may be 15 wt% or less, and specifically in the range of 0.01 to 10 wt%, and preferably in the range of 0.1 to 5.0 wt%, based on the total weight of the electrolyte solution.

A mixture of two or more kinds may be used as the additional additive, and among the above-described additional additives, the mixture of vinylene carbonate (VC) and propane sultone (PS), and the non-aqueous electrolyte solution containing the first additive and the second additive show more excellent effects in improving characteristics after high temperature storage.

The weight ratio of the total weight of the first additive and the second additive to the total weight of the vinylene carbonate (VC) and the propane sultone (PS) may be in the range of 1: 1 to 1: 4, more preferably in the range of 1: 1 to 1: 3, and most preferably in the range of 4: 5 to 2: 5.

When the content of the additive for formation of the SEI film is less than 0.01 wt%, high temperature storage characteristics and gas reduction effects, which are intended to be implemented from the additive, are very weak, and if the content of the additive for formation of the SEI film exceeds 15 wt%, the side reaction may excessively occur. In particular, when a large amount of additives for formation of the SEI film are added, they may not be sufficiently decomposed and may remain in a precipitated or unreacted state in the electrolyte solution at a room temperature. As such, the resistance increases, and the lifespan characteristics of the secondary battery may be deteriorated.

### Lithium secondary battery

Further, in an embodiment of the present invention, a lithium secondary battery including a non-aqueous electrolyte solution for a secondary battery of the present invention is provided.

The lithium secondary battery of the present invention can be manufactured by injecting the non-aqueous electrolyte solution of the present invention into an electrode assembly which is obtained as a positive electrode, a negative electrode, and a separator interposed between the positive electrode and the negative electrode are sequentially laminated. At this time, a positive electrode, a negative electrode and a separator, which have been commonly used in manufacturing a lithium secondary battery, may be used as the positive electrode, the negative electrode, and the separator which form an electrode assembly.

Further, the positive electrode and the negative electrode, which form a lithium secondary battery of the present invention, can be manufactured in a general method and used.

### (1) positive electrode

The positive electrode may be manufactured by forming a positive electrode mixture layer on a positive electrode current collector. The positive electrode mixture layer can be formed by coating a positive electrode slurry, which includes a positive electrode active material, a binder, a conductive material, and a solvent, on a positive electrode current collector, and then drying the slurry and rolling the positive electrode current collector.

The positive electrode current collector is not particularly limited as long as it has conductivity without causing a chemical change in the battery. Examples of the positive electrode current collector include stainless steel, aluminum, nickel, titanium, sintered carbon or aluminum or stainless steel of which the surface has been treated with carbon, nickel, titanium, silver, or the like.

The positive electrode active material is a compound capable of reversible intercalation and deintercalation of lithium, and may specifically include a lithium metal oxide containing lithium and at least one metal such as cobalt, manganese, nickel or aluminum. Specifically, some examples of the lithium metal oxide may include lithium-nickel-manganese-cobalt-based oxide (e.g., Li(NiₚCo_{q}Mnᵣ₁)O₂ (herein, 0 < p < 1, 0 < q < 1, 0 <r1 < 1, p+q+r1=1), or Li(Niₚ₁Co_{q1}Mnᵣ₂)O₄ (herein, 0 < p1 < 2, 0 < q1 < 2, 0 < r2 < 2, p1+q1+r2=2), etc.), or lithium-nickel-cobalt-transition metal (M) oxide (e.g., Li(Niₚ₂Co_{q2}Mnᵣ₃Mₛ₂)O₂ (herein, M is one selected from the group consisting of W, Cu, Fe, V, Cr, Ti, Zr, Zn, Al, In, Ta, Y, La, Sr, Ga, Sc, Gd, Sm, Ca, Ce, Nb, Mg and B, and p2, q2, r3 and s2 are atomic fractions of respectively independent elements, and 0 < p2 < 1, 0 < q2 < 1, 0 < r3 < 1, 0 < s2 < 1, p2+q2+r3+s2=1), etc.).

Examples of the positive electrode active material may include Li(Ni_{1/3}Mn_{1/3}Co_{1/3})O₂, Li(Ni_{0.35}Mn_{0.28}Co_{0.37})O₂, Li(Ni_{0.6}Mn_{0.2}Co_{0.2})O₂,Li(Ni_{0.5}Mn_{0.3}Co_{0.2})O₂, Li(Ni_{0.7}Mn_{0.15}Co_{0.15})O₂, Li(Ni_{0.8}Mn_{0.1}Co_{0.1})O₂ or Li(Ni_{0.8}Co_{0.15}Al_{0.05})O₂.

The content of the positive electrode active material may correspond to 90 to 99 wt% and specifically 93 to 99 wt% of the total weight of solids in the positive electrode slurry.

The binder is added in an amount of 1 to 30% by weight, on the basis of the total weight of solids in the positive electrode slurry, as a component that assists in bonding between the active material and the conductive material and bonding to the current collector. Examples of such binders include polyvinylidene fluoride, polyvinyl alcohol, carboxymethylcellulose, starch, hydroxypropylcellulose, regenerated cellulose, polyvinylpyrrolidone, tetrafluoroethylene, polyethylene, polypropylene, ethylene-propylene-diene terpolymer, sulfonated ethylene-propylene-diene terpolymer, styrene butadiene rubber, fluorine rubber, and various copolymers.

Such a conductive material is not particularly limited as long as it has electrical conductivity without causing a chemical change in the battery, and examples thereof include: carbon powders such as carbon black, acetylene black, Ketjen black, channel black, furnace black, lamp black, or thermal black; graphite powders such as natural graphite or artificial graphite, or graphite, of which the crystal structure has been very much developed; conductive fibers such as carbon fiber and metal fiber; conductive powders such as carbon fluoride, aluminum and nickel powder; conductive whiskey such as zinc oxide and potassium titanate; conductive metal oxides such as titanium oxide; and conductive materials such as polyphenylene derivatives and the like.

The conductive material is usually added in an amount of 0.5 to 20% by weight based on the total weight of solids in the positive electrode slurry.

The solvent may include an organic solvent such as NMP (N-methyl-2-pyrrolidone), and may be used in an amount that becomes a desirable viscosity when the positive electrode active material and optionally a binder and a conductive material are included. For example, the concentration of the solid in the slurry containing the positive electrode active material and, optionally, the binder and the conductive material may be in an amount of 30 wt% to 90 wt%, preferably 40 wt% to 80 wt%.

### (2) negative electrode

The negative electrode may be manufactured by forming a negative electrode mixture layer on a negative electrode current collector. The negative electrode mixture layer may be formed by coating a slurry including a negative electrode active material, a binder, a conductive material, a solvent, and the like on a negative electrode current collector, followed by drying and rolling.

The negative electrode current collector is generally made to a thickness of 3 to 500 micrometers. The negative electrode current collector is not particularly limited as long as it has high electrical conductivity without causing chemical changes in the battery, and examples thereof include copper, stainless steel, aluminum, nickel, titanium, sintered carbon, copper or stainless steel of which the surface has been treated with carbon, nickel, titanium, silver or the like, aluminum-cadmium alloy, or the like. In addition, like the positive electrode current collector, fine unevenness can be formed on the surface to enhance the bonding force of the negative electrode active material, and it can be used in various forms such as a film, a sheet, a foil, a net, a porous body, a foam, and a nonwoven fabric.

Further, the negative electrode active material may include at least one selected from the group consisting of lithium metal, a carbon material capable of reversibly intercalating/deintercalating lithium ions, metal or an alloy of a metal and lithium, a metal oxide, a material capable of doping and dedoping lithium, and a transition metal oxide.

Any carbon-based negative electrode active material, which is generally used in a lithium ion secondary battery, may be used as a carbon material capable of reversibly intercalating/deintercalating the lithium ions, and representative examples thereof may include crystalline carbon, amorphous carbon, or a combination thereof. Some examples of the crystalline carbon may include amorphous, flaky, spherical, or fibrous natural graphite or artificial graphite, and some examples of the amorphous carbon may include soft carbon, hard carbon, mesophase pitch carbide, and calcined coke.

A metal selected from the group consisting of Cu, Ni, Na, K, Rb, Cs, Fr, Be, Mg, Ca, Sr, Si, Sb, Pb, In, Zn, Ba, Ra, Ge, Al and Sn, or an alloy of lithium and these metals may be used.

One selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃(0≤x≤1), LiₓWO₂(0≤x≤1), and SnₓMe₁₋ₓMe'_{y}O_{z} (Me: Mn, Fe, Pb, Ge; Me': Al, B, P, Si, group 1, group 2 and group 3 elements of the periodic table, halogen; 0<x≤1; 1≤y≤3; 1≤z≤8) may be used as the metal oxide.

Some examples of materials capable of doping and dedoping the lithium may include Si, SiOₓ(0<x≤2), Si-Y alloy (Y is one selected from the group consisting of alkali metal, alkali earth metal, group 13 element, group 14 element, transition metal, rare earth element, and is not Si), Sn, SnO₂, Sn-Y (Y is one selected from the group consisting of alkali metal, alkali earth metal, group 13 element, group 14 element, transition metal, rare earth element, and is not Sn), and at least one of them may be mixed with SiO₂.One selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and a combination thereof may be used as the element Y.

Examples of the transition metal oxide include lithium-containing titanium oxide (LTO), vanadium oxide, lithium vanadium oxide, and the like.

The negative electrode active material may be included in 80% by weight to 99% by weight based on the total weight of solids in the negative electrode slurry.

The binder is a component that assists the bonding between the conductive material, the active material and the current collector, and is typically added in an amount of 1 to 30 wt% based on the total weight of solids in the negative electrode slurry. Examples of such binders include polyvinylidene fluoride, polyvinyl alcohol, carboxymethylcellulose, starch, hydroxypropylcellulose, regenerated cellulose, polyvinylpyrrolidone, tetrafluoroethylene, polyethylene, polypropylene, ethylene-propylene-diene terpolymer, sulfonated ethylene-propylene-diene terpolymer, styrene butadiene rubber, fluorine rubber, and various copolymers thereof.

The conductive material is a component for further improving the conductivity of the negative electrode active material, and may be added in an amount of 1 to 20 wt% based on the total weight of solids in the negative electrode slurry. Such a conductive material is not particularly limited as long as it has electrical conductivity without causing a chemical change in the battery, and examples thereof include graphite such as natural graphite and artificial graphite; carbon black such as acetylene black, Ketjen black, channel black, furnace black, lamp black, and thermal black; conductive fibers such as carbon fiber and metal fiber; conductive powders such as carbon fluoride, aluminum and nickel powder; conductive whiskey such as zinc oxide and potassium titanate; conductive metal oxides such as titanium oxide; and conductive materials such as polyphenylene derivatives and the like.

The solvent may include water or an organic solvent such as NMP or alcohol, and may be used in an amount that becomes a desirable viscosity when the negative electrode active material and optionally a binder and a conductive material are included. For example, the concentration of the solid in the slurry containing the negative electrode active material and, optionally, the binder and the conductive material may be in an amount of 30 wt% to 75 wt%, preferably 40 wt% to 65 wt%.

An organic separator or an organic and inorganic composite separator can be used as the separator.

A porous polymer film, which is prepared by a polyolefin-based polymer such as ethylene homopolymer, propylene homopolymer, ethylene/butene copolymer, ethylene/hexene copolymer, and ethylene/methacrylate copolymer, may be used alone, or a laminate thereof may be used as the organic separator. Alternatively, a general porous non-woven fabric such as a non-woven fabric made of a glass fiber having a high melting point, a polyethylene terephthalate fiber, etc. may be used as the organic separator.

An organic/inorganic complex porous safety-reinforcing separator (SRS), which is obtained as a porous coating layer containing inorganic particles and a binder polymer is applied on the porous polyolefin-based separator substrate, may be used as the organic and inorganic complex separator.

Inorganic particles having lithium ion transfer capability or mixtures thereof are preferably used as the inorganic particles, and some examples of the inorganic particles include one or a mixture of two or more selected from the group consisting of BaTiO₃, BaTiO₃, Pb(Zr,Ti)O₃ (PZT), Pb₁₋ₓLaₓZr_{1-y}Ti_{y}O₃ (PLZT, herein, 0<x<1, 0<y<1), hafnia (HfO₂), SrTiO₃, SnO₂, CeO₂, MgO, NiO, CaO, ZnO, ZrO₂, Y₂O₃, Al₂O₃, TiO₂, SiC, and a mixture thereof.

The outer shape of the lithium secondary battery of the present invention is not particularly limited, but the lithium secondary battery may have a cylindrical shape using a can, a prismatic shape, a pouch shape or a coin shape.

Hereinafter, the present invention will be described in detail with reference to examples. However, the embodiments according to the present invention may be modified into various other forms, as set out by the claims and the scope of the present invention should not be construed as being limited to the embodiments described below. The embodiments of the present invention are provided to more fully describe the present invention to those skilled in the art.

### Example 1

### (Preparation of non-aqueous electrolyte solution)

Ethylene carbonate (EC) and ethylmethyl carbonate (EMC) were mixed at the volume ratio of 30: 70, and LiPF₆ and LiFSI were dissolved therein to have 1.0 M concentration of LiPF₆, to thereby manufacture a non-aqueous organic solvent. The non-aqueous electrolyte solution of the present invention was manufactured by adding 0.3 wt% of a compound represented by chemical formula 1a, 0.5 wt% of a compound represented by chemical formula 2a, 1.0 wt% of vinylene carbonate (VC), and 0.5 wt% of propane sultone (PS) to the non-aqueous organic solvent (see following Table 1).

### (Electrode preparation)

A positive electrode active material slurry (74 wt% solids concentration) was manufactured by adding a positive electrode active material (Li(Ni_{0.85} Co_{0.08}Mn_{0.08}Al_{0.02})O₂), a conductive material (carbon black) and a binder (polyvinylidene fluoride) at the weight ratio of 98: 0.7: 1.3, to N-methyl-2-pyrrolidone (NMP) as a solvent. A positive electrode was manufactured by applying the positive electrode active material slurry on a positive electrode current collector (Al film) having a thickness of 15 µm, then drying the slurry and roll-pressing the positive electrode current collector.

A negative electrode active material slurry (52 wt% of solids concentration) was manufactured by adding a negative electrode active material (artificial graphite), a binder (CMC), and a conductive material (carbon black) at the weight ratio of 95.5: 3.5: 1, to distilled water as a solvent. A negative electrode was manufactured by applying the negative electrode active material slurry on a negative electrode current collector (Cu film) having a thickness of 8 µm, then drying the slurry and roll-pressing the negative electrode current collector.

### (Preparation of secondary battery)

A positive electrode and a negative electrode, which were manufactured in the above-described manner, were sequentially laminated together with a polyethylene porous film, to thereby manufacture an electrode assembly. Thereafter, the electrode assembly was put in a battery case, and the non-aqueous electrolyte solution was injected into the battery case, which was then sealed, to thereby manufacture a lithium secondary battery (battery capacity 2 Ah).

### Examples 2 to 6

A non-aqueous electrolyte solution was prepared by changing the amount of the first additive and the amount of the second additive, and the kind and amount of other additives in the example 1 as shown in Table 1. Further, an electrode and a secondary battery were prepared in the same manner as in Example 1.

### Comparative examples 1 to 3

A non-aqueous electrolyte solution was prepared by changing the amount of the first additive and the amount of the second additive, and the kind and amount of other additives in the example 1 as shown in Table 1. Further, an electrode and a secondary battery were prepared in the same manner as in Example 1.

### Experimental Example 1: Evaluation of capacity retention rate after high temperature (60°C) storage

Formation was performed for lithium secondary batteries, which were manufactured in examples 1 to 6, and lithium secondary batteries, which were manufactured in comparative examples 1 to 3, at the condition of 200 mA current (0.1C rate) and the formation-completed batteries were stored at 60°C for one day, and gas in the battery was then removed (degassing process). Thereafter, the charging was performed at conditions of 0.33C/4.2V constant current/ constant voltage (CC/CV) and 4.2V/0.05C at 25°C, and discharging was performed at the condition of 0.33C/2.5V constant current. At this time, the discharge capacity, which was measured using PNE-0506 charge-discharge device (manufacturer: PNE Solution Co., Ltd., 5V, 6A), was defined as the initial discharge capacity.

Thereafter, each secondary battery was set to SOC 100% charge state and was then stored at 60°C for 4 weeks.

Thereafter, charging was performed at conditions of 0.33C/4.2V constant current/ constant voltage (CC/CV) and 4.2V/0.05C at 25°C, and discharging was performed at the condition of 0.33C/2.5V constant current. Further, the discharge capacity was measured using PNE-0506 charge-discharge device (manufacturer: PNE Solution Co., Ltd., 5V, 6A).At this time, the measured capacity was defined as the discharge capacity after high temperature storage.

The measured initial discharge capacity and the discharge capacity after high temperature storage were applied to the following formula (1) to thereby measure the capacity retention rate, and the result was shown in Table 1 below. Capacity retention rate (%) = (Discharge capacity after high temperature storage/ Initial discharge capacity) x 100

### Experimental Example 2: Evaluation of resistance increase rate after high temperature (60°C) storage

Formation was performed for lithium secondary batteries, which were manufactured in examples 1 to 6, and lithium secondary batteries, which were manufactured in comparative examples 1 to 3, at the condition of 200 mA current (0.1C rate), and gas in the battery was then removed (degassing process). Thereafter, charging was performed at conditions of 0.33C/4.2V constant current/ constant voltage (CC/CV) and 4.2V/0.05C at 25°C, and discharging was performed at the condition of 0.33C/2.5V constant current to reach SOC 50% Thereafter, the initial resistance value was obtained by measuring the voltage drop, which was shown in a state that discharge pulse was given with 2.5C constant current for 10 seconds, using PNE-0506 charge-discharge device (manufacturer: PNE Solution Co., Ltd., 5V, 6A). Thereafter, charging was performed at conditions of 0.33C/4.25 constant current/ constant voltage (CC/CV) and 4.2V/0.05C at the voltage operating range of 2.5 to 4.2V, to thereby charge the battery to SOC 100% state.

Thereafter, each secondary battery was left alone at 60°C for 4 weeks.

Thereafter, charging was performed at conditions of 0.33C/4.2V constant current/ constant voltage (CC/CV) and 4.2V/0.05C and discharging was performed at 0.33C using PNE-0506 charge-discharge device (manufacturer: PNE Solution Co., Ltd., 5V, 6A), to thereby allow the battery to be at SOC 50% state. Thereafter, the resistance value after high temperature storage was obtained by measuring a voltage drop which was shown in a state that discharging pulses were given with 2.5C constant current for 10 seconds.

The resistance increase rate (%) for each secondary battery was calculated from the ratio of a resistance, which increased after high temperature storage compared to the initial resistance, using formula (2) as below, and the result was shown in Table 1 below. Resistance increase rate (%) = {(resistance after high temperature storage - initial resistance) / initial resistance} x 100

### Experimental Example 3: Evaluation of volume increase rate after high temperature (60°C) storage

Formation was performed for lithium secondary batteries, which were manufactured in examples 1 to 6, and lithium secondary batteries, which were manufactured in comparative examples 1 to 3, at the condition of 200 mA current (0.1C rate), and gas in the battery was then removed (degassing process). Thereafter, the battery was fully charged at conditions of 0.33C/4.2V constant current/ constant voltage (CC/CV) and 4.2V/0.05C at 25°C to reach SOC 100%. In this state, the initial volume was obtained by putting an insulated lithium secondary battery in a bowl filled with distilled water at a room temperature using TWD-150DM (manufacturer: Two-pls) and performing calculation using Archimedes' principle.

Thereafter, each secondary battery was left alone at 60°C for 4 weeks.

Thereafter, after cooling each lithium secondary battery at a room temperature, the volume after high temperature storage was measured in the same method as mentioned above, and the measured initial volume and the volume after high temperature storage were substituted into following formula (3) to calculate the volume increase rate. Thereafter, the result was shown in Table 1. Formula (3): volume increase rate (%) = [{(volume after high temperature storage - initial volume) / initial volume)} x100]

**[Table 1]**

| | First additive (wt. %) | Seconda dditive (wt. %) | Weight ratio of first additive to second additive | Otheradditives | | After high temperature storage (vs. example 1) | | |
|---|---|---|---|---|---|---|---|---|
| | | | | type | Content | Capacity retention rate (%) | Resista nceincr easerate (%) | Volume increas erate (%) |
| Examp le 1 | 0.3 | 0.5 | 3:5 | VC/PS | 1.0/0.5 | 0 | 0 | 0 |
| Examp le 2 | 0.4 | 0.5 | 4:5 | VC/PS | 1.0/0.5 | 0.6 | -3.4 | -0.5 |
| Examp le 3 | 0.5 | 0.5 | 5:5 | VC/PS | 1.0/0.5 | 0.9 | -4.5 | -0.8 |
| Examp le 4 | 0.5 | 0.4 | 5:4 | VC/PS | 1.0/0.5 | 0.5 | -4.1 | -0.7 |
| Examp le 5 | 0.5 | 0.3 | 5:3 | VC/PS | 1.0/0.5 | 0.2 | -3.9 | -1.2 |
| Examp le 6 | 0.3 | 0.5 | 3:5 | - | - | -2.2 | 3.7 | 7.3 |
| Compa rativeE xample 1 | x | x | - | VC/PS | 1.0/0.5 | -1.1 | 10.7 | 5.5 |
| Compa rativeE xample 2 | 0.3 | x | - | VC/PS | 1.0/0.5 | -0.8 | 3.5 | 3.8 |
| Compa rativeE xample 3 | x | 0.5 | - | VC/PS | 1.0/0.5 | -1.0 | 7.1 | 4.7 |

Referring to the above Table 1, the secondary batteries according to examples 1 to 5 showed a more excellent capacity retention rate after high temperature storage, compared to the secondary batteries according to comparative examples 1 to 3. Further, the resistance increase rate and volume increase rate after high temperature storage decreased in the secondary batteries according to examples 1 to 5, compared to the secondary batteries according to comparative examples 1 to 3.Therefore, it is seen that the non-aqueous electrolyte solution containing both the first additive and the second additive of the present invention shows the effect of improving characteristics after high temperature storage.

Further, the characteristics after high temperature storage of the secondary battery according to example 6, in which additional additive (VC, PS) was not added, were poor, compared to examples 1 to 5, in which the additional additive was added. Hence, it is seen that it is preferable to additionally include the additional additive in the non-aqueous electrolyte solution in addition to the first additive and the second additive to improve characteristics after high temperature storage.

## Claims

1. A non-aqueous electrolyte solution for a lithium secondary battery, the non-aqueous electrolyte solution comprising:
a lithium salt; an organic solvent;
a first additive; and
second additive,
wherein the first additive is a compound represented by following chemical formula 1 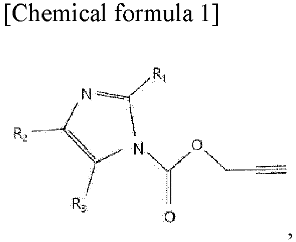
wherein each of R1 to R3 is a hydrogen or alkyl group having 1 to 3 carbon atoms,
wherein the second additive is a compound represented by following chemical formula 2: 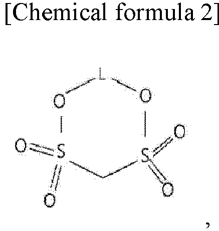 and
wherein L is an alkylene group having 1 to 10 carbon atoms.

2. The non-aqueous electrolyte solution of claim 1, wherein an amount of the first additive contained in the electrolyte solution corresponds to 0.05 to 3 wt% of a total weight of the electrolyte solution, and
wherein an amount of the second additive contained in the electrolyte solution corresponds to 0.05 to 5 wt% of the total weight of the electrolyte solution.

3. The non-aqueous electrolyte solution of claim 1, wherein an amount of the first additive and the second additive contained in the electrolyte solution corresponds to 0.3 to 3 wt% of a total weight of the electrolyte solution.

4. The non-aqueous electrolyte solution of claim 1, wherein a weight ratio of the first additive to the second additive is in a range of 2: 8 to 7: 3.

5. The non-aqueous electrolyte solution of claim 1, wherein a weight ratio of the first additive to the second additive is in a range of 3: 7 to 6: 4.

6. The non-aqueous electrolyte solution of claim 1, wherein the compound represented by the chemical formula 1 is a compound represented by following chemical formula 1a:

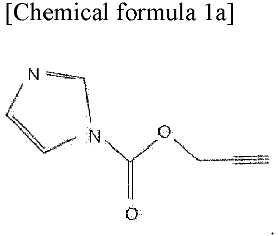

7. The non-aqueous electrolyte solution of claim 1, wherein the compound represented by the chemical formula 2 is a compound represented by following chemical formula 2a:

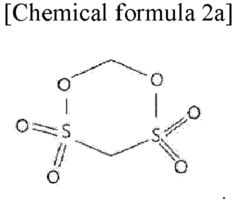

8. The non-aqueous electrolyte solution of claim 1, further comprising: at least one selected from the group consisting of halogen-substituted or unsubstituted cyclic carbonate compound, propionate compound, nitrile compound, phosphate compound, borate compound, sultone compound, sulfate compound, and lithium salt compound.

9. The non-aqueous electrolyte solution of claim 1, further comprising: vinylene carbonate (VC) and propane sultone (PS) as an additive.

10. The non-aqueous electrolyte solution of claim 9, wherein a weight ratio of a total weight of the first additive and the second additive to a total weight of the vinylene carbonate (VC) and the propane sultone (PS) is in a range of 1: 1 to 1: 4.

11. The non-aqueous electrolyte solution of claim 9, wherein a weight ratio of a total weight of the first additive and the second additive to a total weight of the vinylene carbonate (VC) and the propane sultone (PS) is in a range of 1: 1 to 1: 3.

12. The non-aqueous electrolyte solution of claim 1, wherein the lithium salt contains LiPF₆.

13. A lithium secondary battery including the non-aqueous electrolyte solution for a lithium secondary battery of claim 1.

## Patentansprüche

1. Nichtwässrige Elektrolytlösung für eine Lithium-Sekundärbatterie, wobei die nichtwässrige Elektrolytlösung umfasst:
ein Lithiumsalz; ein organisches Lösungsmittel;
ein erstes Additiv; und
zweites Additiv;
worin das erste Additiv eine durch die folgende chemische Formel 1 dargestellte Verbindung ist: 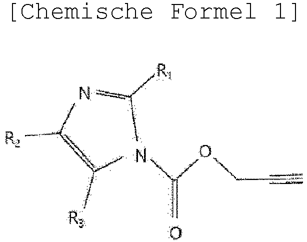
worin jedes von R1 bis R3 ein Wasserstoff oder eine Alkylgruppe mit 1 bis 3 Kohlenstoffatomen ist,
worin das zweite Additiv eine durch die folgende chemische Formel 2 dargestellte Verbindung ist: 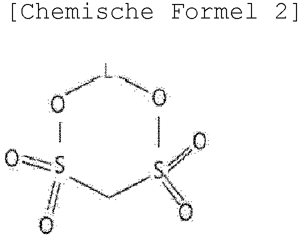 und worin L eine Alkylengruppe mit 1 bis 10 Kohlenstoffatomen ist.

2. Nichtwässrige Elektrolytlösung gemäß Anspruch 1, worin die Menge des ersten Additivs, die in der Elektrolytlösung enthalten ist, 0,05 bis 3 Gew.-% des Gesamtgewichts der Elektrolytlösung entspricht, und
worin die Menge des zweiten Additivs, die in der Elektrolytlösung enthalten ist, 0,05 bis 5 Gew.-% des Gesamtgewichts der Elektrolytlösung entspricht.

3. Nichtwässrige Elektrolytlösung gemäß Anspruch 1, worin die Menge des ersten Additivs und des zweiten Additivs, die in der Elektrolytlösung enthalten sind, 0,3 bis 3 Gew.-% des Gesamtgewichts der Elektrolytlösung entsprechen.

4. Nichtwässrige Elektrolytlösung gemäß Anspruch 1, worin das Gewichtsverhältnis des ersten Additivs zum zweiten Additiv im Bereich von 2:8 bis 7:3 liegt.

5. Nichtwässrige Elektrolytlösung gemäß Anspruch 1, worin das Gewichtsverhältnis des ersten Additivs zum zweiten Additiv im Bereich von 3:7 bis 6:4 liegt.

6. Nichtwässrige Elektrolytlösung gemäß Anspruch 1, worin die durch die chemische Formel 1 dargestellte Verbindung eine durch die folgende chemische Formel 1a dargestellte Verbindung ist:

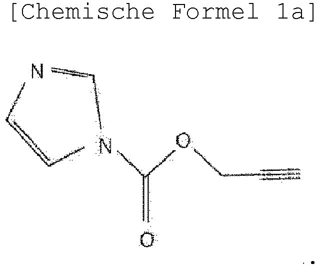

7. Nicht-wässrige Elektrolytlösung gemäß Anspruch 1, worin die durch die chemische Formel 2 dargestellte Verbindung eine durch die folgende chemische Formel 2a dargestellte Verbindung ist:

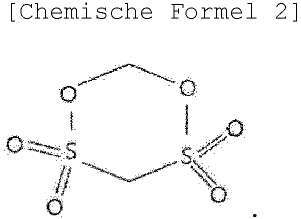

8. Nichtwässrige Elektrolytlösung gemäß Anspruch 1, ferner umfassend: zumindest eines, ausgewählt aus der Gruppe bestehend aus Halogen-substituierten oder unsubstituierten cyclischen Carbonatverbindungen, Propionatverbindungen, Nitrilverbindungen, Phosphatverbindungen, Boratverbindungen, Sultonverbindungen, Sulfatverbindungen und Lithiumsalzverbindungen.

9. Nichtwässrige Elektrolytlösung gemäß Anspruch 1, ferner umfassend: Vinylencarbonat (VC) und Propansulton (PS) als ein Additiv.

10. Nichtwässrige Elektrolytlösung gemäß Anspruch 9, worin das Gewichtsverhältnis des Gesamtgewichts des ersten Additivs und des zweiten Additivs zum Gesamtgewicht des Vinylencarbonats (VC) und des Propansultons (PS) im Bereich von 1:1 bis 1:4 liegt.

11. Nichtwässrige Elektrolytlösung gemäß Anspruch 9, worin das Gewichtsverhältnis des Gesamtgewichts des ersten Additivs und des zweiten Additivs zum Gesamtgewicht des Vinylencarbonats (VC) und des Propansultons (PS) im Bereich von 1:1 bis 1:3 liegt.

12. Nichtwässrige Elektrolytlösung gemäß Anspruch 1, worin das Lithiumsalz LiPF₆ enthält.

13. Lithium-Sekundärbatterie, umfassend die nichtwässrige Elektrolytlösung für eine Lithium-Sekundärbatterie gemäß Anspruch 1.

## Revendications

1. Solution d'électrolyte non aqueux pour une batterie secondaire au lithium, la solution d'électrolyte non aqueux comprenant :
un sel de lithium ; un solvant organique ;
un premier additif ; et
un second additif,
dans laquelle le premier additif est un composé représenté par la formule chimique 1 suivante : 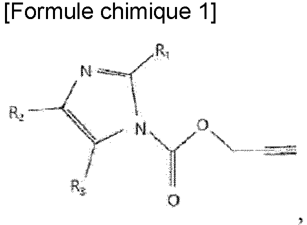
dans laquelle chacun de R1 à R3 est un groupe hydrogène ou alkyle ayant 1 à 3 atomes de carbone,
dans laquelle le second additif est un composé représenté par la formule chimique 2 suivante : 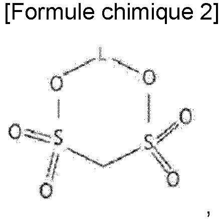 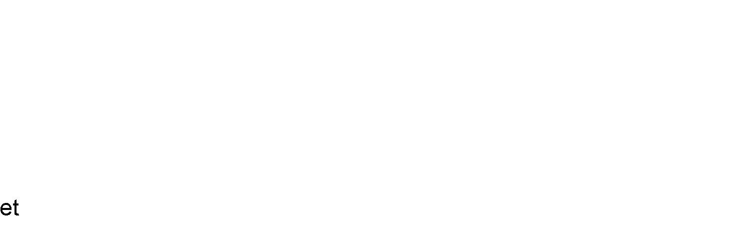 dans laquelle L est un groupe alkylène ayant 1 à 10 atomes de carbone.

2. Solution d'électrolyte non aqueux selon la revendication 1, dans laquelle une quantité du premier additif contenu dans la solution d'électrolyte correspond à 0,05 à 3 % en poids d'un poids total de la solution d'électrolyte, et
dans laquelle une quantité du second additif contenu dans la solution d'électrolyte correspond à 0,05 à 5 % en poids du poids total de la solution d'électrolyte.

3. Solution d'électrolyte non aqueux selon la revendication 1, dans laquelle une quantité du premier additif et du second additif contenus dans la solution d'électrolyte correspond à 0,3 à 3 % en poids d'un poids total de la solution d'électrolyte.

4. Solution d'électrolyte non aqueux selon la revendication 1, dans laquelle un rapport en poids du premier additif au second additif est dans une plage de 2:8 à 7:3.

5. Solution d'électrolyte non aqueux selon la revendication 1, dans laquelle un rapport en poids du premier additif au second additif est dans une plage de 3:7 à 6:4.

6. Solution d'électrolyte non aqueux selon la revendication 1, dans laquelle le composé représenté par le formule chimique 1 est un composé représenté par la formule chimique 1a suivante :

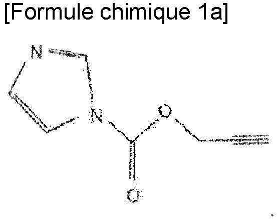

7. Solution d'électrolyte non aqueux selon la revendication 1, dans laquelle le composé représenté par la formule chimique 2 est un composé représenté par la formule chimique 2a suivante :

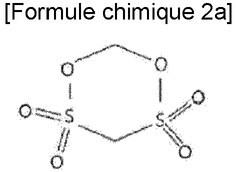

8. Solution d'électrolyte non aqueux selon la revendication 1, comprenant en outre : au moins l'un sélectionné parmi le groupe constitué d'un composé de carbonate cyclique substitué par un halogène ou non substitué, un composé de proprionate, un composé de nitrile, un composé de phosphate, un composé de borate, un composé de sultone, un composé de sulfate et un composé de sel de lithium.

9. Solution d'électrolyte non aqueux selon la revendication 1, comprenant en outre : du carbonate de vinylène (VC) et du sultone de propane (PS) comme additif.

10. Solution d'électrolyte non aqueux selon la revendication 9, dans laquelle un rapport en poids d'un poids total du premier additif et du second additif sur un poids total du carbonate de vinylène (VC) et du sultone de propane (PS) est dans une plage de 1:1 à 1:4.

11. Solution d'électrolyte non aqueux selon la revendication 9, dans laquelle un rapport en poids d'un poids total du premier additif et du second additif sur un poids total du carbonate de vinylène (VC) et du sultone de propane (PS) est dans une plage de 1:1 à 1:3.

12. Solution d'électrolyte non aqueux selon la revendication 1, dans laquelle le sel de lithium contient du LiPF₆.

13. Batterie secondaire au lithium incluant la solution d'électrolyte non aqueux pour une batterie secondaire au lithium selon la revendication 1.
